# EUROPÄISCHE PATENTSCHRIFT

(11) **EP 2 728 226 B1**
(45) Veröffentlichungstag und Bekanntmachung des Hinweises auf die Patenterteilung: **25.03.2015**
(21) Anmeldenummer: 12007459.6
(22) Anmeldetag: 31.10.2012
(51) Int. Cl.: F16K 3/18, F16K 31/122, F16K 51/02

(54) **Vakuumventil**
Vacuum valve
Vanne à vide

(43) Veröffentlichungstag der Anmeldung: 07.05.2014
(73) Patentinhaber: VAT Holding AG, 9469 Haag (CH)
(72) Erfinder: Frehner, Hanspeter, 9475 Sevelen (CH); Zanetti, Claudio, 7206 Igis (CH)
(74) Vertreter: Fechner, Thomas

(56) Entgegenhaltungen:
- EP-B1- 0 684 415
- DE-B3-102008 051 349
- US-B1- 6 431 518

## Beschreibung

Die vorliegende Erfindung betrifft ein Ventil, insbesondere Vakuumventil, bei dem zumindest ein Verschlussorgan des Ventils zum Verschließen zumindest einer Durchlassöffnung, insbesondere des Ventils, mittels eines Ventilantriebs des Ventils ausgehend von einer maximalen Öffnungsstellung, in der das Verschlussorgan die Durchlassöffnung zumindest teilweise freigibt, zunächst auf einer ersten Teilstrecke in eine Zwischenstellung bewegbar ist und das Verschlussorgan ausgehend von der Zwischenstellung auf zumindest einer zweiten, zur ersten Teilstrecke abgewinkelten, Teilstrecke in eine Schließstellung, in der das Verschlussorgan die Durchlassöffnung verschließt, bewegbar ist, wobei der Ventilantrieb zumindest zwei jeweils mit einem Druckmedium beaufschlagbare Zylinderräume aufweist, wobei in jedem der Zylinderräume zumindest ein Kolben verschiebbar gelagert ist und die Kolben mit zumindest einem Vorspannelement aneinander abgestützt sind.

Bei gattungsgemäßen Ventilen ist vorgesehen, dass das Verschlussorgan auf seinem Weg von der maximalen Öffnungsstellung in die Schließstellung zumindest zwei Teilstrecken durchläuft, wobei diese zueinander abgewinkelt sind. Auf einer ersten Teilstrecke wird das Verschlussorgan von der maximalen Öffnungsstellung in eine Zwischenstellung gebracht. Auf der zweiten Teilstrecke erfolgt dann die Bewegung des Verschlussorgans in seine Schließstellung, in der es dann in der Regel die Durchlassöffnung verschließt bzw. abdichtet. Beim Stand der Technik sind Lösungen bekannt, bei denen der hierfür verwendete Ventilantrieb zumindest zwei, jeweils mit einem Druckmedium beaufschlagbare Zylinderräume aufweist.

Eine solche Konstruktion eines Ventils ist in der EP 0 684 415 B1 offenbart.

Gattungsgemäße Ventile sind in der US 6,431,518 B1 und in der DE 10 2008 051 349 B3 gezeigt. Gemeinsam ist diesen Schriften u.a., dass Zylinderräume, in denen die Kolben verschiebbar gelagert sind, über Druckmedienleitungen miteinander verbunden sind.

Aufgabe der Erfindung ist es, eine alternative Art des Ventilantriebs für gattungsgemäße Ventile zur Verfügung zu stellen.

Hierfür ist gemäß der Erfindung vorgesehen, dass das Vorspannelement ein Federelement oder eine Kolbenzylindereinheit oder ein Elektromotor oder ein Linearmotor ist.

Gemäß der Erfindung sind die beiden verschiebbar in jeweils einem der Zylinderräume gelagerten Kolben somit über ein Vorspannelement direkt oder indirekt miteinander verbunden. Das Vorspannelement wirkt dabei sowohl auf den einen wie auch auf den anderen Kolben ein. Günstigerweise ist in diesem Zusammenhang vorgesehen, dass das Vorspannelement die Kolben jeweils gegen das im jeweiligen Zylinderraum vorhandene Druckmedium, vorzugsweise in Richtung voneinander weg, vorspannt bzw. drückt. Die Bewegung der Kolben wird, abgesehen von nicht vermeidbaren Reibungskräften bei der Führung der Kolben, günstigerweise ausschließlich durch das Wechselspiel der Drücke des Druckmediums und der Belastung mittels des Vorspannelementes bestimmt. Mit dem Vorspannelement kann eine Vorspannung erzeugt werden bzw. ein entsprechender Druck auf die Kolben ausgeübt werden. In diesem Sinne kann es sich also auch um mittels externer Druck- oder Energiequellen betätigbare Vorspannelemente in Form von Kolbenzylindereinheiten, Elektromotoren, Linearmotoren und dergleichen handeln. Besonders bevorzugt handelt es sich bei dem Vorspannelement aber um ein Federelement. Mit Federelementen sind generell elastische Elemente gemeint, welche bei entsprechender Druckbeaufschlagung oder Zugbeanspruchung elastisch verformt werden und bei Wegfall der äußeren Kräfte von sich aus elastisch wieder in ihre Ausgangsform und/oder -stellung zurückkehren. Bei den Vorspannelementen handelt es sich bevorzugt z.B. um mechanische Federn wie Blattfedern, Spiralfedern und dergleichen. Es können aber auch Gasfedern oder entsprechende Elastomerkörper oder dergleichen eingesetzt werden.

Als Druckmedium, mit dem die Zylinderräume beaufschlagbar sind, kommen grundsätzlich sowohl Gase als auch Flüssigkeiten als auch Mischungen daraus in Frage. Besonders bevorzugt handelt es sich um pneumatisch betriebene, also mit Gas betriebene Ventile. Als Druckmedium steht hier besonders kostengünstig z.B. die normale Umgebungsluft zur Verfügung, welche entsprechend unter Druck gesetzt werden kann.

Das Verschlussorgan kann in verschiedenster Art und Weise wie beim Stand der Technik ausgebildet sein. Es kann sich z.B. um einen Ventilteller handeln. Meist sind am Verschlussorgan oder am damit in der Schließstellung zusammenwirkenden Sitz entsprechende Dichtungen vorhanden, mit denen das Verschlussorgan in der Schließstellung an einem die Durchlassöffnung umgebenden Sitz anliegt. Es sei noch darauf hingewiesen, dass die Durchlassöffnung und auch der sie umgebende Sitz nicht zwingend einstückiger Teil bzw. Teil des Ventils sein müssen. Im Sinne einer vollständigen kompakten Bauweise ist es aber günstig, wenn die Durchlassöffnung und/oder der die Durchlassöffnung umgebende Sitz Teil des Ventils sind.

Günstigerweise ist vorgesehen, dass das Verschlussorgan die Durchlassöffnung in seiner maximalen Öffnungsstellung vollständig freigibt. In der Zwischenstellung zwischen erster und zweiter Teilstrecke kann das Verschlussorgan dann z.B. bereits mehr oder weniger in Deckung mit der Durchlassöffnung gebracht sein, ohne diese abdichtend zu verschließen. Der tatsächliche Verschluss, vorzugsweise der abdichtende Verschluss, der Durchlassöffnung liegt dann erst in der Schließstellung vor. Die genannte Zwischenstellung markiert den Übergang von der ersten in die zweite Teilstrecke. Dieser Übergang ist daran zu erkennen, dass das Verschlussorgan beim Übergang von der ersten auf die zweite Teilstrecke und umgekehrt eine Richtungsänderung ausführt. In diesem Sinne sind die Teilstrecken also abgewinkelt zueinander angeordnet. Die beiden Teilstrecken können zumindest in der unmittelbaren Umgebung der Zwischenstellung orthogonal oder in einem anderen Winkel schräg aufeinander stehen. Jedenfalls sind sie im Sinne des Abgewinkeltseins nicht parallel bzw. koaxial zueinander angeordnet, es geht vielmehr darum, dass das Verschlussorgan beim Übergang zwischen den Teilstrecken eine Richtungsänderung erfährt, was nicht unbedingt einen scharfen Winkel voraussetzt.

Besonders bevorzugte Ausgestaltungsformen der Erfindung sehen vor, dass die Zylinderräume mittels einer gemeinsamen Druckleitung für das Druckmedium miteinander verbunden sind. Besonders bevorzugt ist dabei vorgesehen, dass die Druckleitung permanent bzw. in allen Betriebszuständen offen ist. Hierdurch sind die Zylinderräume für das Druckmedium dann auch permanent miteinander verbunden. Bei diesen Ausgestaltungsformen ist es möglich, beide Zylinderräume mittels nur einer Druckquelle mit Druck zu beaufschlagen und mittels nur eines Druckablasses den Druck abzulassen. Günstigerweise erfolgt dies über die gemeinsame Druckleitung. In diesem Sinne sehen bevorzugte Varianten der Erfindung vor, dass die Zylinderräume in einem ersten Betriebszustand zum Bewegen des Verschlussorgans von der Schließstellung in die maximale Öffnungsstellung mit einer Druckquelle in Verbindung stehen und in einem zweiten Betriebszustand zum Bewegen des Verschlussorgans von der maximalen Öffnungsstellung in die Schließstellung mit einem Druckablass in Verbindung stehen. Das genannte Vorspannelement kann dann in diesem zweiten Betriebszustand die Kolben auseinanderdrücken, um so das Verschlussorgan von der maximalen Öffnungsstellung in die Schließstellung zu bringen. Günstigerweise erfolgt all dies über die gemeinsame Druckleitung. Das Umschalten zwischen den Betriebszuständen kann günstigerweise über ein entsprechendes Steuerventil erfolgen. Bevorzugte, besonders einfach realisierbare Varianten der Erfindung sehen vor, dass während des Betriebs des Ventils, vorzugsweise permanent, in dem einen der Zylinderräume derselbe Druck wie im anderen der Zylinderräume herrscht. Um beim Öffnungs- und auch Schließvorgang das Verschlussorgan gezielt auf den jeweiligen Teilstrecken zu führen, sehen besonders bevorzugte Varianten der Erfindung vor, dass die Kolben unterschiedlich große Kolbenflächen, welche jeweils mittels des Druckmediums im jeweiligen Zylinderraum beaufschlagt sind, aufweisen. So kann z.B. vorgesehen sein, dass der Kolben mit der kleineren Kolbenfläche zur Bewegung des Verschlussorgans auf der ersten Teilstrecke mit dem Verschlussorgan verbunden ist. Günstigerweise handelt es sich dabei um eine starre Verbindung zwischen diesem Kolben mit der kleineren Kolbenfläche und dem Verschlussorgan. Diese starre Verbindung kann z.B. über eine entsprechende Stange realisiert werden. Auf diese Art und Weise wird erreicht, dass beim Schließvorgang das Verschlussorgan zuerst auf der ersten, vorzugsweise linearen, Teilstrecke bewegt wird.

Günstig ist es in diesem Zusammenhang auch, wenn der Kolben mit der größeren Kolbenfläche zur Bewegung des Verschlussorgans auf der zweiten Teilstrecke mit einem Teil einer Kulissenführung verbunden ist. Über die Kulissenführung kann dann eine entsprechende Abwinkelung bzw. Richtungsänderung der zweiten Teilstrecke gegenüber der ersten Teilstrecke erreicht werden. Durch die genannte Ausgestaltungsform kann dann auch erreicht werden, dass die Bewegung auf der zweiten Teilstrecke erst dann erfolgt, wenn das Verschlussorgan die oben genannte Zwischenstellung erreicht hat, also die erste Teilstrecke vollkommen abgefahren wurde. Geeignete Kulissenführungen sind beim Stand der Technik an sich bekannt. Es handelt sich hierbei um Zwangsführungen, die eine gewisse Art der Bewegung vorgeben.

In bevorzugten Ausgestaltungsformen der Erfindung führen die Kulissenführungen zu einer Schwenkbewegung. Bei einer solchen Schwenkbewegung ist günstigerweise vorgesehen, dass die zweite Teilstrecke gekrümmt ausgebildet ist. Im Sinne dieser Schwenkbewegung kann auch vorgesehen sein, dass der Ventilantrieb zumindest eine bezüglich eines Ventilgehäuses des Ventils ortsfeste Schwenkachse aufweist, an der ein, die Zylinderräume aufweisender, Zylinder schwenkbar gelagert ist.

Es ist noch darauf hinzuweisen, dass jeder Zylinderraum in einem eigenen Zylinder realisiert werden kann. Diese Zylinder können dann, vorzugsweise starr, miteinander verbunden sein. In bevorzugten Varianten ist aber vorgesehen, dass die beiden Zylinderräume in einem gemeinsamen Zylinder realisiert sind. In diesem gemeinsamen Zylinder sind dann auch beide Kolben geführt. Auch das Vorspannelement befindet sich dann in der Regel in diesem gemeinsamen Zylinder.

Die erste Teilstrecke ist in bevorzugten Ausgestaltungsformen linear ausgebildet. Die zweite Teilstrecke ist in bevorzugten Varianten gekrümmt ausgebildet.

Weitere Merkmale und Ausgestaltungsvarianten der Erfindung werden nachfolgend beispielhaft an einer konkreten Realisierungsform der Erfindung erläutert. Es zeigen:
Fig. 1 bis 3 Längsschnitte durch die erfindungsgemäße Ausführungsvariante des Ventils entlang der in Fig. 6 dargestellten Schnittlinie AA;
Fig. 4 einen Längsschnitt entlang der in Fig. 6 dargestellten Schnittlinie BB;
Fig. 5 einen Längsschnitt entlang der in Fig. 6 dargestellten diagonalen Schnittlinie CC;
Fig. 6 eine Draufsicht, in der die diversen Schnittlinien eingezeichnet sind und
Fig. 7 einen schematisierten Schaltplan zu einer bevorzugten Variante der Druckbeaufschlagung der Zylinderräume.

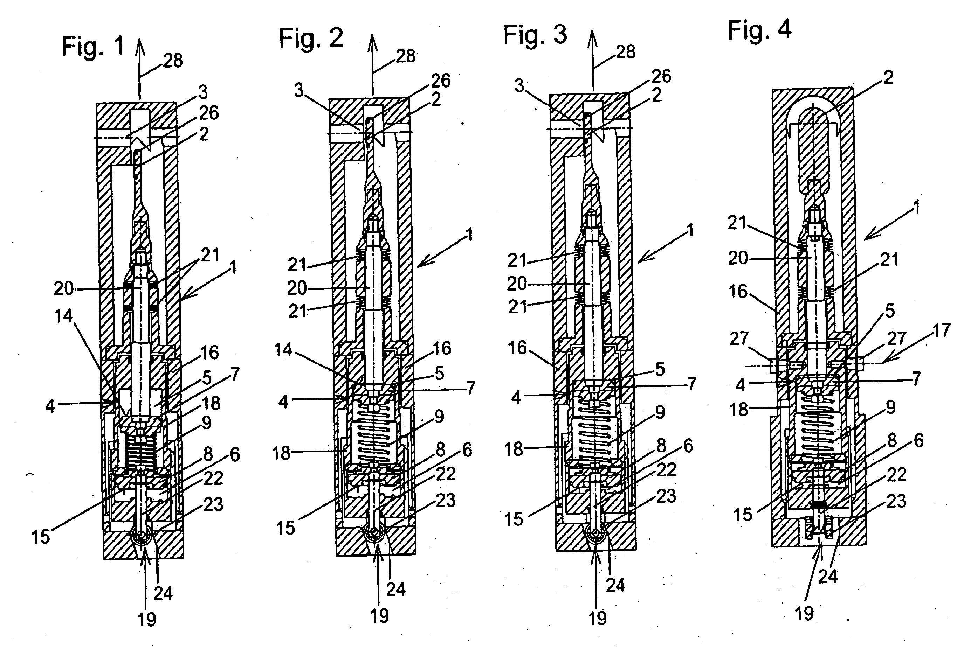

In Fig. 1 befindet sich das Verschlussorgan 2 in seiner maximalen Öffnungsstellung, in der es in diesem Ausführungsbeispiel die Durchlassöffnung 3 vollständig freigibt. In Fig. 2 ist am Ende der ersten Teilstrecke eine Zwischenstellung erreicht, in der das Verschlussorgan 2 zwar bereits in Deckung mit der Durchlassöffnung 3 liegt, diese aber noch nicht verschließt. Fig. 3 zeigt die Schließstellung, bei der das Verschlussorgan 2, hier mit seinen Dichtungen 26, so an dem die Durchlassöffnung 3 umgebenden Sitz anliegt, dass die Durchlassöffnung 3 abgedichtet ist.

Auf der ersten Teilstrecke ausgehend von Fig. 1 hin zur Zwischenstellung gemäß Fig. 2 führt das Verschlussorgan 2 in diesem Ausführungsbeispiel eine rein lineare Bewegung auf der ersten Teilstrecke durch. Bei der Bewegung von der Zwischenstellung gemäß Fig. 2 in die Schließstellung gemäß Fig. 3 folgt das Verschlussorgan 2 einer gekrümmt ausgebildeten zweiten Teilstrecke, indem der gesamte Ventilantrieb 4 samt Verschlussorgan 2 um die Schwenkachse 17 relativ zum Ventilgehäuse 16 geschwenkt wird. Hierzu ist, wie besonders gut in Fig. 4 zu sehen, der Ventilantrieb 4 bzw. dessen gemeinsamer Zylinder 18 mittels der Achsbolzen 27 um die Schwenkachse 17 schwenkbar im Ventilgehäuse gelagert.

Das Verschlussorgan 2 ist im gezeigten Ausführungsbeispiel über die Stange 20 starr mit dem Kolben 7, welcher verschiebbar im Zylinderraum 5 des hier gemeinsamen Zylinders 18 gelagert ist, verbunden. Die mittels des im Zylinderraum 5 vorhandenen Druckmediums mit Druck beaufschlagbare Kolbenfläche 14 des Kolbens 7 ist kleiner als die mittels des im anderen Zylinderraum 6 vorhandenen Druckmediums mit Druck beaufschlagbaren Kolbenfläche 15 des anderen Kolbens 8. Die beiden, in den Zylinderräumen 5 und 6 verschiebbar gelagerten Kolben 7 und 8 sind mittels des Vorspannelementes 9 aneinander abgestützt und auch vorgespannt. Das hier in Form einer Spiralfeder ausgebildete Vorspannelement 9 drückt die beiden Kolben 7 und 8 jeweils gegen das im jeweiligen Zylinderraum 5 und 6 vorhandene Druckmedium in Richtung voneinander weg. Während der Kolben 7 mit der kleineren Kolbenfläche 14 mit dem Verschlussorgan über die Stange 20 starr verbunden ist, ist der Kolben 8 mit der größeren Kolbenfläche 15 mit einem Teil der Kulissenführung 19 verbunden. Bei dem Teil der Kulissenführung 19 handelt es sich bei diesem Ausführungsbeispiel um die auf der Stange 22 drehbar gelagerte Rolle 23, die in der hier zur Längsrichtung des Ventils 1 schrägen Kulisse 24 geführt ist. Die Stange 22 ist in diesem Ausführungsbeispiel starr mit dem Kolben 8 verbunden.

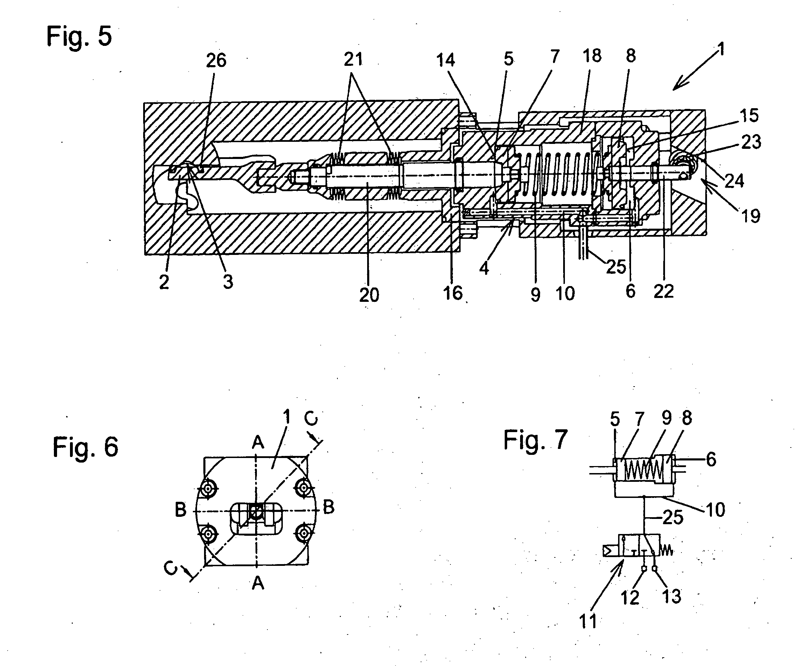

Die Zylinderräume 5 und 6 sind im gezeigten Ausführungsbeispiel über die gemeinsame Druckleitung 10 miteinander verbunden. Es handelt sich hierbei um eine permanente, also in allen Betriebszuständen offene Druckleitung 10, die dafür sorgt, dass die Zylinderräume 5 und 6 permanent miteinander verbunden sind. Hierdurch wird erreicht, dass während des Betriebs des Ventils 1 permanent in dem einen der Zylinderräume 5 derselbe Druck wie in dem anderen der Zylinderräume 6 herrscht. Die Druckleitung 10 und ihre Anschlüsse zu den Zylinderräumen 5 und 6 sind besonders gut in dem Diagonalschnitt gemäß Fig. 5 zu sehen.

In diese gemeinsame Druckleitung 10 mündet die in Fig. 5 sichtbare Zuleitung 25, über die die Zylinderräume 5 und 6 durch Einleitung von Druckmedium wie z.B. Druckluft, anderen Gasen oder Flüssigkeiten mit Druck beaufschlagt werden können. Das Druckablassen erfolgt ebenfalls über die gemeinsame Druckleitung 10 und die Zuleitung 25, welche in diesem Sinne auch eine Ableitung ist.

Fig. 7 zeigt in einem schematisierten Schaltplan, wie die Zylinderräume 5 und 6 mit Druck beaufschlagt werden können und wie der Druck aus ihnen wieder abgelassen werden kann. In diesem Ausführungsbeispiel erfolgt dies über die gemeinsame Druckleitung 10, die Zuleitung 25 und das darin angeordnete Steuerventil 11. In der in Fig. 7 dargestellten Stellung verbindet das Steuerventil 11 die Zylinderräume 5 und 6 mit einem Druckablass 13. Dieser kann z.B. unter normalem Atmosphärendruck stehen, sodass Druckmedium entsprechend aus den Zylinderräumen 5 und 6 abgelassen werden kann. Zur Druckbeaufschlagung der Zylinderräume 5 und 6 mit Druckmedium wird das Steuerventil 11 in eine hier nicht dargestellte Stellung überführt, in der es die Druckquelle 12 mit den Zylinderräumen 5 und 6 verbindet, sodass diese von der Druckquelle 12 mit Druckmedium beaufschlagt werden. Druckquelle 12 und Druckablass 13 können in allen an sich beim Stand der Technik bekannten und geeigneten Ausgestaltungsformen realisiert werden. Dies gilt sowohl für gasförmige als auch für flüssige Druckmedien. Im Zusammenhang mit Fig. 7 ist noch darauf hinzuweisen, dass das Steuerventil 11 auch Zwischenstellungen einnehmen kann, in denen die Zylinderräume 5 und 6 weder mit der Druckquelle 12 noch mit dem Druckablass 13 verbunden sind. In diesen Stellungen ist dann das jeweilige Druckmedium im jeweiligen Zylinderraum 5 und 6 eingesperrt.

Im Folgenden wird die Funktionsweise des Ventilantriebs 4 dieses Ausführungsbeispiels erläutert.

In der maximalen Öffnungsstellung gemäß Fig. 1 ist das unter Überdruck stehende Druckmedium in den Zylinderräumen 5 und 6 eingesperrt. Die Kolben 7 und 8 sind aufeinander zu gefahren und das Vorspannelement 9 ist komprimiert. Um den Schließvorgang einzuleiten, wird nun das Steuerventil 11 in seine in Fig. 7 gezeigte Stellung gebracht, in der die Zylinderräume 5 und 6 mit dem Druckablass 13 verbunden sind. Hierdurch wird es möglich, dass Druckmedium aus den Zylinderräumen 5 und 6 abströmen kann, während das Vorspannelement 9 die Kolben 7 und 8 auseinanderdrückt. Aufgrund der kleineren mit Druck beaufschlagten Kolbenfläche 14 bei ansonsten gleichem Innendruck in den Zylinderräumen 5 und 6 bewegt sich nun zunächst der Kolben 7 mit der kleineren Kolbenfläche 14. Er schiebt dabei über die starre Verbindung in Form der Stange 20 das Verschlussorgan 2 entlang der ersten Teilstrecke linear in die in Fig. 2 dargestellte Zwischenstellung. Die abdichtenden Bälge 21 werden dabei auseinandergezogen. Erst wenn die Zwischenstellung erreicht ist, drückt das Vorspannelement 9 den Kolben 8 mit der größeren, mit Druck beaufschlagten Kolbenfläche 15 tiefer in den Zylinderraum 6. Dadurch wird die über die Stange 22 mit dem Kolben 8 verbundene Rolle 23 entlang der schräg zur Längsrichtung 28 angeordneten Kulisse 24 bewegt, wodurch es zu einem Verschwenken des Zylinders 18 bzw. des Ventilantriebs 4 um die Schwenkachse 17 kommt. Hierdurch wird das Verschlussorgan 2 von der in Fig. 2 dargestellten Zwischenstellung entlang der gekrümmt ausgebildeten zweiten Teilstrecke in die Schließstellung gemäß Fig. 3 gebracht. Damit ist der Schließvorgang dann abgeschlossen.

Zum Öffnen, also zur Bewegung des Verschlussorgans 2 von der Schließstellung gemäß Fig. 3 über die Zwischenstellung gemäß Fig. 2 in die maximal geöffnete Stellung gemäß Fig. 1 wird das Steuerventil 11 so eingestellt, dass die Zylinderräume 5 und 6 mit der Druckquelle 12 in Verbindung stehen. Ist dies der Fall, so wird zunächst der Zylinderraum 6 mit Druckmedium gefüllt, wodurch der Kolben 8 mit der größeren Kolbenfläche 15 in Richtung hin zum Verschlussorgan 2 bewegt wird. Hierdurch läuft die Rolle 23 der Kulissenführung 19 wiederum an der schräg zur Längsrichtung 28 des Ventils 1 ausgerichteten Kulisse 24 entlang, wodurch der gemeinsame Zylinder 18 um die Schwenkachse 17 geschwenkt wird, wodurch sich das Verschlussorgan 2 entlang der gekrümmt ausgebildeten zweiten Teilstrecke von der Schließstellung gemäß Fig. 3 in die Zwischenstellung gemäß Fig. 2 bewegt. Anschließend dringt dann Druckmedium in den Zylinderraum 5 ein, wodurch unter Fortsetzung der Komprimierung des Vorspannelementes 9 nun auch der Kolben 7 nach unten bewegt wird, sodass sich das Verschlussorgan 2 entlang der linearen ersten Teilstrecke in Richtung hin zu der in Fig. 1 gezeigten maximalen Öffnungsstellung bewegt. Die geschilderte Abfolge der Bewegung ergibt sich aufgrund der unterschiedlich großen Kolbenflächen 14 und 15 trotzdem beide Zylinderräume 5 und 6 jeweils unter demselben Druck stehen.

Der Vollständigkeit halber wird noch darauf hingewiesen, dass nicht zwingend vorgesehen sein muss, dass die Zylinderräume 5, 6 mit demselben Druck beaufschlagt und die Kolbenflächen 14, 15 der Kolben 7, 8 unterschiedlich groß sind. Insbesondere bei Beaufschlagung mit unterschiedlichen Drücken sind auch andere, in der Regel aber nur aufwendiger zu realisierende Varianten denkbar, um die beschriebenen Bewegungsabläufe des Verschlussorgans 2 zu realisieren.

Die erfindungsgemäße Technologie kann für unterschiedlichste Arten von Ventilen 1 eingesetzt werden. Besonders bevorzugt kann sie in der sogenannten Vakuumtechnik zum Einsatz kommen. In diesem Sinne kann man das Ventil 1 auch als Vakuumventil bezeichnen. Von Vakuumtechnik spricht man im Allgemeinen ab Drücken kleiner 1 mbar (Millibar) bzw. 100 Pascal.

### Legende

### zu den Hinweisziffern:

- 1: Ventil
- 2: Verschlussorgan
- 3: Durchlassöffnung
- 4: Ventilantrieb
- 5: Zylinderraum
- 6: Zylinderraum
- 7: Kolben
- 8: Kolben
- 9: Vorspannelement
- 10: gemeinsame Druckleitung
- 11: Steuerventil
- 12: Druckquelle
- 13: Druckablass
- 14: Kolbenfläche
- 15: Kolbenfläche
- 16: Ventilgehäuse
- 17: Schwenkachse
- 18: Zylinder
- 19: Kulissenführung
- 20: Stange
- 21: Balg
- 22: Stange
- 23: Rolle
- 24: Kulisse
- 25: Zuleitung
- 26: Dichtung
- 27: Achsbolzen
- 28: Längsrichtung

## Patentansprüche

1. Ventil (1), insbesondere Vakuumventil, bei dem zumindest ein Verschlussorgan (2) des Ventils (1) zum Verschließen zumindest einer Durchlassöffnung (3), insbesondere des Ventils (1), mittels eines Ventilantriebs (4) des Ventils (1) ausgehend von einer maximalen Öffnungsstellung, in der das Verschlussorgan (2) die Durchlassöffnung (3) zumindest teilweise freigibt, zunächst auf einer ersten Teilstrecke in eine Zwischenstellung bewegbar ist und das Verschlussorgan (2) ausgehend von der Zwischenstellung auf zumindest einer zweiten, zur ersten Teilstrecke abgewinkelten, Teilstrecke in eine Schließstellung, in der das Verschlussorgan (2) die Durchlassöffnung (3) verschließt, bewegbar ist, wobei der Ventilantrieb (4) zumindest zwei jeweils mit einem Druckmedium beaufschlagbare Zylinderräume (5, 6) aufweist, wobei in jedem der Zylinderräume (5, 6) zumindest ein Kolben (7, 8) verschiebbar gelagert ist und die Kolben (7, 8) mit zumindest einem Vorspannelement (9) aneinander abgestützt sind, **dadurch gekennzeichnet, dass** das Vorspannelement (9) ein Federelement oder eine Kolbenzylindereinheit oder ein Elektromotor oder ein Linearmotor ist.

2. Ventil (1) nach Anspruch 1, **dadurch gekennzeichnet, dass** die Zylinderräume (5, 6) mittels einer gemeinsamen, vorzugsweise permanent offenen, Druckleitung (10) für das Druckmedium, vorzugsweise permanent, miteinander verbunden sind.

3. Ventil (1) nach Anspruch 1 oder 2, **dadurch gekennzeichnet, dass** die Zylinderräume (5, 6), vorzugsweise über die gemeinsame Druckleitung (10) und/oder über ein Steuerventil (11), in einem ersten Betriebszustand zum Bewegen des Verschlussorgans (2) von der Schließstellung in die maximale Öffnungsstellung mit einer Druckquelle (12) in Verbindung stehen und in einem zweiten Betriebszustand zum Bewegen des Verschlussorgans (2) von der maximalen Öffnungsstellung in die Schließstellung mit einem Druckablass (13) in Verbindung stehen.

4. Ventil (1) nach einem der Ansprüche 1 bis 3, **dadurch gekennzeichnet, dass** während des Betriebs des Ventils (1), vorzugsweise permanent, in dem einen der Zylinderräume (5) derselbe Druck wie im anderen der Zylinderräume (6) herrscht.

5. Ventil (1) nach einem der Ansprüche 1 bis 4, **dadurch gekennzeichnet, dass** die Kolben (7, 8) unterschiedlich große Kolbenflächen (14, 15), welche jeweils mittels des Druckmediums im jeweiligen Zylinderraum (5, 6) beaufschlagt sind, aufweisen.

6. Ventil (1) nach Anspruch 5, **dadurch gekennzeichnet, dass** der Kolben (7) mit der kleineren Kolbenfläche (14) zur Bewegung des Verschlussorgans (2) auf der ersten Teilstrecke mit dem Verschlussorgan (2), vorzugsweise starr, verbunden ist.

7. Ventil (1) nach Anspruch 5 oder 6, **dadurch gekennzeichnet, dass** der Kolben (8) mit der größeren Kolbenfläche (15) zur Bewegung des Verschlussorgans (2) auf der zweiten Teilstrecke mit einem Teil einer Kulissenführung (19), vorzugsweise starr, verbunden ist.

8. Ventil (1) nach einem der Ansprüche 1 bis 7, **dadurch** gekennzeichnet, **dass** die erste Teilstrecke linear verläuft und/oder die zweite Teilstrecke gekrümmt ist.

9. Ventil (1) nach einem der Ansprüche 1 bis 8, **dadurch gekennzeichnet, dass** der Ventilantrieb (4) zumindest eine bezüglich eines Ventilgehäuses (16) des Ventils (1) ortsfeste Schwenkachse (17) aufweist, an der ein, die Zylinderräume (5, 6) aufweisender, Zylinder (18) schwenkbar gelagert ist.

10. Ventil (1) nach einem der Ansprüche 1 bis 9, **dadurch** gekennzeichnet, dass das Vorspannelement (9) die Kolben (7, 8) jeweils gegen das im jeweiligen Zylinderraum (5, 6) vorhandene Druckmedium, vorzugsweise in Richtung voneinander weg, vorspannt bzw. drückt.

## Claims

1. Valve (1), in particular vacuum valve, in which at least one closing member (2) of the valve (1) for closing off at least one through opening (3), in particular of the valve (1), initially is movable along a first section into an intermediate position by means of a valve actuator (4) of the valve (1) from a fully open position, in which the closing member (2) at least partially opens the through opening (3), and the closing member (2) is movable from the intermediate position along at least one second section arranged at an angle with respect to the first section into a closed position, in which the closing member (2) closes off the through opening (3), the valve actuator (4) having at least two cylinder chambers (5, 6) which can be supplied with a pressure medium in each case, at least one piston (7, 8) being displaceably mounted in each of the cylinder chambers (5, 6) and the pistons (7, 8) being braced against each other by means of at least one pre-tensioning element (9), **characterized in that** the pre-tensioning element (9) is a spring element or a piston cylinder unit or an electric motor or a linear motor.

2. Valve (1) according to Claim 1, **characterized in that** the cylinder chambers (5, 6) are connected to each other, preferably in a permanent manner, by means of a common, preferably permanently open, pressure line (10) for the pressure medium.

3. Valve (1) according to Claim 1 or 2, **characterized in that** the cylinder chambers (5,6) are connected with a pressure source (12), preferably via the common pressure line (10) and/or via a control valve (11), in a first operating condition for moving the closing member (2) from the closed position into the fully open position and are connected with a pressure discharge outlet (13) in a second operating condition for moving the closing member (2) from the fully open position into the closed position.

4. Valve (1) according to one of Claims 1 to 3, **characterized in that**, during operation of the valve (1), the same pressure exists in one (5) of the cylinder chambers as in the other one (6) of the cylinder chambers, preferably in a permanent manner.

5. Valve (1) according to one of Claims 1 to 4, **characterized in that** the pistons (7, 8) have piston areas (14, 15) of different sizes which are each acted on by the pressure medium inside the respective cylinder chamber (5, 6).

6. Valve (1) according to Claim 5, **characterized in that** the piston (7) with the smaller piston area (14) is connected, preferably rigidly, to the closing member (2), in order to move the closing member (2) along the first section.

7. Valve (1) according to Claim 5 or 6, **characterized in that** the piston (8) with the larger piston area (15) is connected, preferably rigidly, to a part of a slotted-link guide (19), in order to move the closing member (2) along the second section.

8. Valve (1) according to one of Claims 1 to 7, **characterized in that** the first section extends linearly and/or the second section is curved.

9. Valve (1) according to one of Claims 1 to 8, **characterized in that** the valve actuator (4) has at least one pivoting axis (17) which is fixed with respect to a valve housing (16) of the valve (1) and on which a cylinder (18) having the cylinder chambers (5, 6) is pivotably mounted.

10. Valve (1) according to one of Claims 1 to 9, **characterized in that** the pre-tensioning element (9) pretensions or presses each of the pistons (7, 8) against the pressure medium present inside the respective cylinder chamber (5, 6), preferably in a direction away from each other.

## Revendications

1. Vanne (1), en particulier vanne à vide, dans laquelle au moins un organe de fermeture (2) de la vanne (1) pour la fermeture d'au moins une ouverture de passage (3), en particulier de la vanne (1), peut être déplacé au moyen d'un actionneur (4) de la vanne (1) à partir d'une position d'ouverture maximale, dans laquelle l'organe de fermeture (2) libère au moins partiellement l'ouverture de passage (3), d'abord sur un premier tronçon vers une position intermédiaire, et l'organe de fermeture (2) à partir de la position intermédiaire peut être déplacé sur au moins un deuxième tronçon, coudé par rapport au premier tronçon, vers une position de fermeture, dans laquelle l'organe de fermeture (2) ferme l'ouverture de passage (3), l'actionneur de vanne (4) comportant au moins deux compartiments cylindriques (5, 6), pouvant recevoir chacun un milieu sous pression, au moins un piston (7, 8) étant monté mobile dans chacun des compartiments cylindriques (5, 6) et les pistons (7, 8) prenant appui l'un contre l'autre par l'intermédiaire d'au moins un élément de précontrainte (9), **caractérisée en ce que** l'élément de précontrainte (9) est un élément à ressort ou une unité piston/cylindre ou un moteur électrique ou un moteur linéaire.

2. Vanne (1) selon la revendication 1, **caractérisée en ce que** les compartiments cylindriques (5, 6) sont reliés l'un à l'autre, de préférence de manière permanente, par l'intermédiaire d'une conduite sous pression (10) commune pour le milieu sous pression, de préférence ouverte en permanence.

3. Vanne (1) selon la revendication 1 ou 2, **caractérisée en ce que**, dans une première position de service, les compartiments cylindriques (5, 6) sont en liaison avec une source de pression (12), de préférence par l'intermédiaire de la conduite sous pression (10) commune et/ou par l'intermédiaire d'une vanne de commande (11), pour le déplacement de l'organe de fermeture (2) depuis la position de fermeture vers la position d'ouverture maximale, et, dans une deuxième position de service, sont en liaison avec un système de relâchement de la pression (13) pour le déplacement de l'organe de fermeture (2) depuis la position d'ouverture maximale vers la position de fermeture.

4. Vanne (1) selon l'une quelconque des revendications 1 à 3, **caractérisée en ce que** pendant le fonctionnement de la vanne (1), il règne de préférence de manière permanente la même pression dans l'un des compartiments cylindriques (5) et dans l'autre compartiment cylindrique (6).

5. Vanne (1) selon l'une quelconque des revendications 1 à 4, **caractérisée en ce que** les pistons (7, 8) comportent des surfaces de piston (14, 15) de taille différente, lesquelles sont sollicitées chacune par le milieu sous pression dans le compartiment cylindrique (5, 6) respectif.

6. Vanne (1) selon la revendication 5, **caractérisée en ce que** le piston (7) avec la plus petite surface de piston (14) est relié, de préférence de manière fixe, à l'organe de fermeture (2) en vue du déplacement de l'organe de fermeture (2) sur le premier tronçon.

7. Vanne (1) selon la revendication 5 ou 6, **caractérisée en ce que** le piston (8) avec la plus grande surface de piston (15) est relié, de préférence de manière fixe, à une partie d'un guidage à coulisse (19) en vue du déplacement de l'organe de fermeture (2) sur le deuxième tronçon.

8. Vanne (1) selon l'une quelconque des revendications 1 à 7, **caractérisée en ce que** le premier tronçon est linéaire et/ou le deuxième tronçon est courbe.

9. Vanne (1) selon l'une quelconque des revendications 1 à 8, **caractérisée en ce que** l'actionneur de vanne (4) comporte au moins un axe de pivotement (17), qui est fixe par rapport à un boîtier (16) de la vanne (1) et sur lequel est monté pivotant un cylindre (18) comportant les compartiments cylindriques (5, 6).

10. Vanne (1) selon l'une quelconque des revendications 1 à 9, **caractérisée en ce que** l'élément de précontrainte (9) précontraint, plus précisément pousse les pistons (7, 8), de préférence dans la direction les écartant l'un de l'autre, respectivement à l'encontre du milieu sous pression présent dans chacun des compartiments cylindriques (5, 6).
